# FASCICULE DE BREVET EUROPEEN

(11) **EP 3 609 590 B1**
(45) Date de publication et mention de la délivrance du brevet: **25.11.2026**
(21) Numéro de dépôt: 18718594.7
(22) Date de dépôt: 29.03.2018
(51) Int. Cl.: B01D 1/00, B01D 3/00

(54) **DISPOSITIF DE DOUBLE DISTRIBUTION DE LIQUIDE UTILE NOTAMMENT DANS UN APPAREIL SIÈGE D'ÉCOULEMENT GRAVITAIRE D'UNE PHASE LIQUIDE**
VORRICHTUNG ZUR DOPPELTEN VERTEILUNG EINER FLÜSSIGKEIT, BESONDERS GEEIGNET FÜR EIN APPARAT IN DEM EINE FLÜSSIGE PHASE AUF BASIS VON SCHWERKRAFT FLIESST
DEVICE OF DOUBLE LIQUID DISTRIBUTION USEFUL IN PARTICULAR IN AN APPARATUS FOR GRAVITY FLOW OF A LIQUID PHASE

(30) Priorité: 13.04.2017 FR 1753236
(43) Date de publication de la demande: 19.02.2020
(73) Titulaire: Saipem S.p.A., 20138 Milano (IT)
(72) Inventeur: DUPARC, Bertrand, 78960 Voisins le Bretonneux (FR); RODIER, Benjamin, 92400 Courbevoie (FR); BOLOSIER, Boris, 78180 Montigny le Bretonneux (FR)
(74) Mandataire: Croce, Valeria
(86) Numéro de dépôt international: PCT/FR2018/050773
(87) Numéro de publication internationale: WO 2018/189447

(56) Documents cités:
- EP-A2- 1 980 303
- CA-A1- 2 933 719
- FR-A1- 2 771 017
- FR-A1- 3 030 295

## Description

### Arrière-plan de l'invention

La présente invention se rapporte au domaine général des distributeurs de liquide embarqués sur support flottant inclus dans des colonnes de fractionnement ou dans des colonnes de lavage par solvant ainsi que dans des colonnes de régénération associées ou dans les échangeurs bobinés verticaux utilisés pour la liquéfaction du gaz naturel et de manière plus générale encore dans tout type d'appareil vertical siège d'un écoulement gravitaire d'une phase liquide nécessitant d'être distribuée de manière homogène dans une zone disposée dessous le dispositif de distribution de liquide et s'étendant sur une section horizontale de l'appareil à écoulement gravitaire, l'appareil à écoulement gravitaire étant installé sur des supports flottants tels que FPSOs ou des FLNGs.

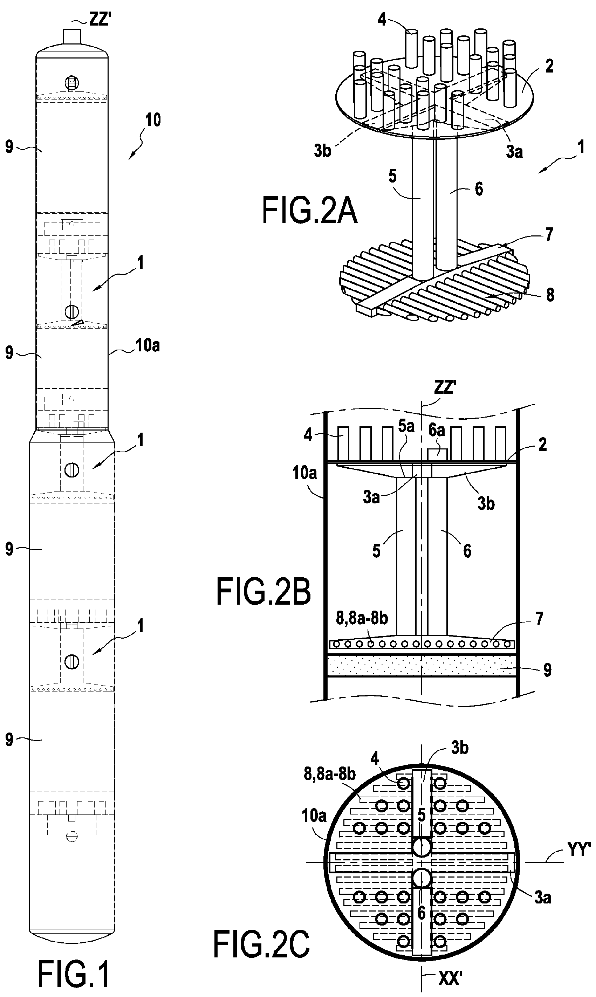

Les colonnes de fractionnement ou de lavage 10 montrées sur la figure 1 sont le siège de transferts de matière et l'énergie entre une phase vapeur ascendante et une phase liquide descendante sous l'effet de l'accélération de la pesanteur. Ces transferts se produisent à la surface de la phase liquide. Pour maximiser la surface de l'interface entre la phase liquide et la phase vapeur, les colonnes 10 sont remplies de lits à garnissage 9 occupant la totalité de la section circulaire de la colonne. Ces lits de garnissage sont constitués d'un milieu solide poreux offrant une grande surface de contact avec le liquide. Le liquide, sous l'effet de sa tension superficielle, s'étale autour du solide pour le mouiller, en formant un film de faible épaisseur qui à son tour offrira une grande surface de contact avec la vapeur.

Les colonnes 10 présentent une paroi de forme cylindrique d'axe vertical lorsque le support flottant est au repos, et susceptible de connaitre des mouvements d'inclinaison par rapport à cette position verticale. Ces colonnes contiennent une pluralité de distributeurs de liquide 1, chaque distributeur coopérant avec un lit de garnissage 9 disposé sous le distributeur de liquide. La mise en contact des 2 phases nécessite donc que le liquide soit aspergé par le distributeur de liquide, réparti de manière la plus homogène possible au sommet du lit à garnissage d'une part, et que l'homogénéité du flux de liquide reste conservée au fil de l'écoulement et en cas de mouvement du support flottant, d'autre part, jusqu'à ce que le liquide ressorte à la base du lit de garnissage tandis que la vapeur remonte à travers le lit de garnissage et à travers le distributeur.

Les échangeurs bobinés offrent une configuration quasi identique à celle d'une colonne de fractionnement de la figure 1, sachant que des faisceaux de tubes enroulés en bobines d'axe vertical sont installés en lieu et place des lits de garnissage.

La fonction d'un distributeur de liquide selon l'invention est de fournir une répartition du flux du liquide la plus homogène possible au-dessus d'une dite zone, notamment au-dessus du lit de garnissage pour une colonne - ou au-dessus d'un faisceau de tubes enroulés en bobines pour un échangeur, ou au-dessus d'une section horizontale quelconque pour un appareil vertical en particulier lorsque la colonne, l'échangeur ou l'appareil vertical à écoulement gravitaire et ses distributeurs sont soumis à des mouvements qui viennent perturber ces répartitions de liquide en engendrant des hétérogénéités du flux liquide sur les sections de la colonne, l'échangeur ou l'appareil vertical à écoulement gravitaire.

Le problème spécifique de ces appareils verticaux à écoulement gravitaire installées sur des FPSOs ou des FLNGs sujets à des mouvements est que le vecteur accélération auquel est soumis le flux de liquide n'est plus colinéaire à l'axe de la colonne, donnant ainsi naissance à des hétérogénéités de distribution du flux sur la section de l'appareil à écoulement gravitaire. C'est pour limiter l'amplitude de ces hétérogénéités, que l'on met en œuvre dans ces appareils à écoulement gravitaire une pluralité de distributeurs et une pluralité de dites zones, notamment une pluralité de lits de garnissage de manière à pouvoir redistribuer le liquide entre deux dites zones et éviter ainsi que les hétérogénéités de distributions ne se propagent en s'amplifiant sur des hauteurs d'écoulement trop longues. Dans le cas où le concepteur ne souhaiterait pas multiplier les lits de garnissage (dans le cas d'une colonne) ou de faisceaux de tubes bobinés (dans le cas d'un échangeur) le dispositif de distribution de liquide proposé permettra quoi qu'il en soit d'atteindre une meilleure distribution de liquide qu'un autre type de distributeur de liquide gravitaire conventionnel. La hauteur de ces distributeurs peut être très significative (jusqu'à 4 mètres) sachant qu'une même colonne peut comporter jusqu'à 3 distributeurs et un échangeur bobiné jusqu'à 3 faisceaux de tubes.

Le brevet EP-878221 décrit un exemple de ce type de distributeur pour des colonnes soumises à des mouvements installées sur des supports flottants. La configuration de distributeur décrite dans ce brevet est décrite plus loin dans cette description sous la dénomination « Mono distributeur ».

Dans sa version mono distributeur, un distributeur classique comporte :
- dans sa partie supérieure, un plateau collecteur de liquide 2 horizontal (pour collecter le liquide tombant du lit de garnissage 9 supérieur ou d'une alimentation de la colonne),
- dans sa partie inférieure, un arrangement d'une série de rampes tubulaires de distribution 8 rectilignes disposées horizontalement et parallèlement entre elles, percées d'orifices en sous face permettant d'asperger et répartir le débit de liquide de manière homogène sur le lit de garnissage 9 du dessous, et
- entre le plateau collecteur 2 et les rampes de distribution 8, un conduit central vertical 5 de descente de liquide alimentant les rampes de distribution 8.

Le débit de liquide à travers les orifices 8c des rampes de distribution 8 est fonction de la pression statique du liquide à l'entrée de l'orifice, cette pression statique étant proportionnelle à la hauteur de liquide au-dessus de l'orifice donc la hauteur de liquide dans le conduit vertical 5.

La hauteur de liquide dans le conduit central 5 détermine les débits à travers les orifices situés et répartis le long des rampes 8 depuis le centre des rampes du distributeur 8 jusqu'aux deux extrémités. En pratique, on configure un distributeur en termes de hauteur et diamètre de conduit central 5, du nombre et dimensions des rampes 8 et de leurs orifices 8c, de sorte qu'on obtienne une fourchette de débit minimal Qmin, et débit maximal Qmax pour une fourchette de hauteur de liquide minimal Hmin et maximal Hmax garantissant une distribution de liquide satisfaisante en terme d'homogénéité de répartition entre les différents orifices. Avec un seul conduit 5, il faut un ratio Hmax/Hmin à proportion du carré des débits Qmax/Qmin.

En cas de mouvements du support flottant, on aura une hauteur de liquide différente pour un orifice situé au centre de la rampe et un orifice situé à l'extrémité d'une rampe du distributeur. Pour garantir une bonne homogénéité de la distribution de liquide entre les différents orifices, il faut configurer le distributeur (on dit aussi « calibrer hydrauliquement » le distributeur) pour que le niveau de liquide de référence au centre du distributeur soit suffisamment élevé par rapport à la différence des hauteurs de liquide vues respectivement par un orifice situé au centre et un orifice situé à l'extrémité d'une rampe du distributeur. Cette calibration doit prendre en compte le débit minimum de fonctionnement du distributeur car c'est au débit minimal Qmin que l'hétérogénéité de distribution entre les différents orifices en cas d'inclinaison du support flottant est la plus grande.

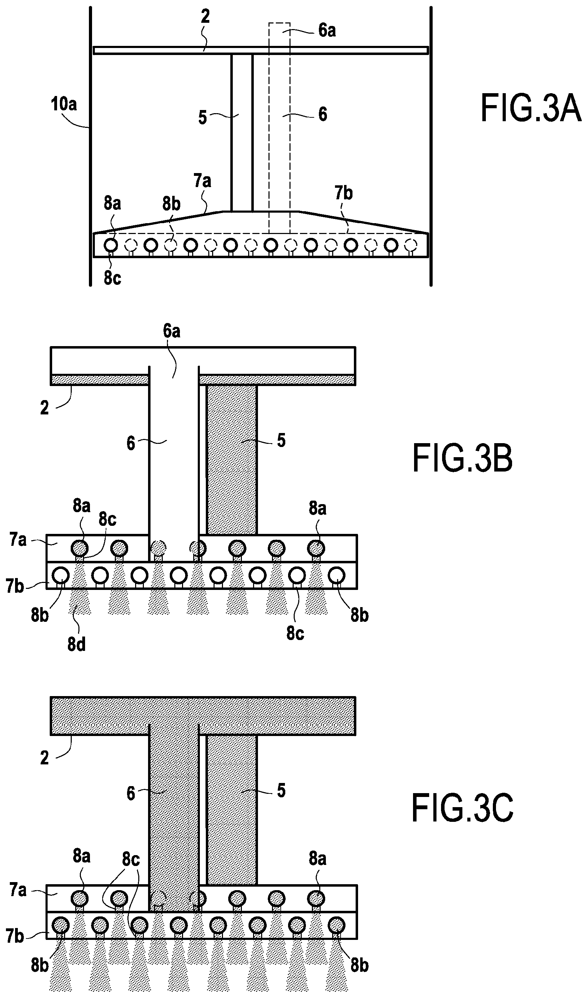

On a proposé des « distributeurs double à débordement » tels que représentés sur les figures 2A-2C et 3A-3C afin d'améliorer la qualité de la distribution de liquide, dans une colonne 10 soumise à des mouvements, sur l'ensemble de la gamme de débit de fonctionnement. Plus précisément, ces distributeurs 1 à double distribution de liquide comportent deux conduits centraux 5, 6 qui alimentent chacun une série de rampes 8a, 8b spécifiquement et le deuxième conduit 6a dépasse en hauteur le plateau collecteur 2 de sorte que le deuxième conduit ne commence à se remplir de liquide que lorsque le premier conduit 5 déborde et que le débit liquide excédentaire se déverse dans le deuxième conduit 6 par son ouverture supérieure 6a. Ainsi si le débit total de liquide réparti entre les orifices 8c des premières rampes 8a excède la valeur maximale Q₁max de débit homogène, la hauteur de liquide H₁ dans le premier conduit 5 atteint une valeur maximale Hmax et le débit excédentaire déborde dans le deuxième conduit 6 et les deuxièmes rampes 8b rentrent ainsi en fonction.

Ce système double ici dénommé « distributeur à double distribution de liquide » permet d'accroitre la capacité hydraulique de distribution. Par exemple, si on autorise une fourchette de débit du premier distributeur Q₁ dans un ratio de 1 à 5 entre le débit minimal Q₁min et débit maximal Q₁max, cela signifie qu'avec un distributeur avec un seul conduit, le ratio de H₁min à H₁max doit être de 1 à 25 alors qu'un distributeur double permet de réduire la hauteur maximale requise H₁max du premier conduit puisque le deuxième conduit accroit la capacité hydraulique de distribution.

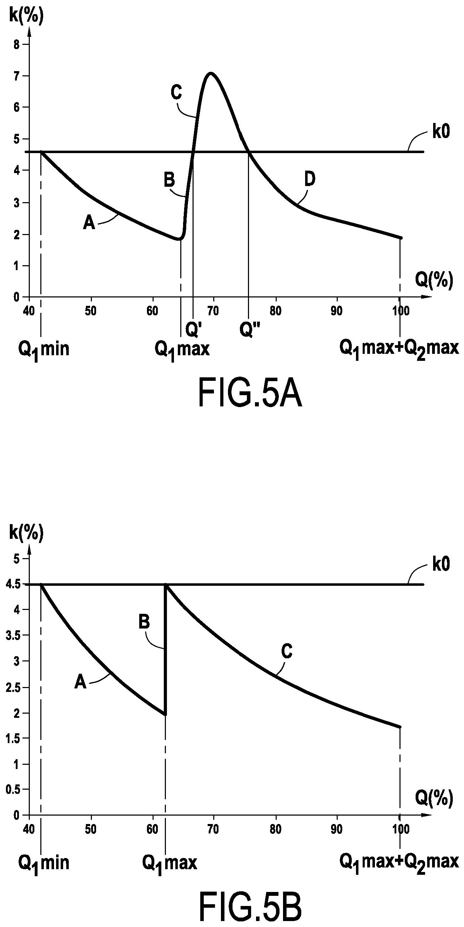

Toutefois ce système double à débordement connu n'est pas satisfaisant comme explicité plus loin en liaison avec la figure 5A. En effet, le régime de fonctionnement de l'ensemble du deuxième conduit 6 et des deuxièmes rampes 8b dans la zone de transition (lorsque l'on passe d'un mode de fonctionnement avec le seul premier distributeur à un mode de fonctionnement double avec les deux distributeurs en action) n'est pas satisfaisant si le débit excédentaire empruntant le deuxième conduit reste inférieur à un certain débit minimal Q2min, et donc, la hauteur de liquide dans le deuxième conduit 6 restera inférieure à la hauteur H₂min requise pour assurer une bonne homogénéité de distribution dans les orifices 8c des deuxièmes rampes 8b. Quand on fonctionne à un débit seulement légèrement supérieur au débit homogène maximal de saturation Q₁max du premier distributeur comprenant le premier conduit 5 et les premières rampes 8a, le deuxième distributeur comprenant le deuxième conduit 6 et les deuxièmes rampes 8b fonctionne dans des mauvaises conditions avec un débit trop faible inférieur à Q₂min, et donc une hauteur de liquide inférieure à celle requise pour assurer une homogénéité de débit du deuxième distributeur.

Une analyse technique approfondie menée par les inventeurs a en effet révélé ce défaut du système « double à débordement ». Ce système « double à débordement » réalise en effet une qualité de distribution « hors spécification » sur un segment de débit de fonctionnement significatif (de l'ordre de 10%) lorsque le débit commence à dépasser le débit pour lequel le premier distributeur (premier conduit et premières rampes) a été calibré. Par exemple, dans le cas où le premier distributeur a été calibré pour un débit homogène maximal (Q₁max) de 65% du débit maximal nominal (Q₁max+Q₂max) et le deuxième distributeur (deuxième conduit et deuxièmes rampes) pour prendre le complément de débit homogène maximal (Q₂max) entre 65% et 100%, la qualité de la distribution dans le deuxième distributeur est « hors spécification » lorsque le débit à distribuer se situe sensiblement entre 65% et 75% du débit maximum.
FR 2 771 017 décrit un distributeur de liquide pour une colonne de fractionnement comprend un récipient principal à fond perforé, ainsi que conduit adapté pour véhiculer par gravité le liquide issu d'au moins une ouverture du fond perforé jusqu'à un point de fourniture.
CA 2 933 719 décrit une installation comportant deux rampes de distribution liés aux deux conduits de distribution.
EP 1 980 303 décrit une vanne pour la connexion de deux conduits.

### Objet et résumé de l'invention

La présente invention a donc pour but principal de fournir un dispositif de double distribution de liquide amélioré utile dans une colonne de fractionnement ou de lavage, ou dans un échangeur bobiné ou tout type d'appareil vertical siège d'un écoulement gravitaire d'une phase liquide nécessitant d'être distribuée de manière homogène sur une section horizontale de l'appareil dans une zone en dessous dudit dispositif de distribution de liquide qui surmonte les inconvénients du dispositif de double distribution de liquide à débordement et notamment qui garantisse une homogénéité de la distribution de liquide sur toute la section d'une colonne lorsque celle-ci est soumise à des mouvements et ce sur une fourchette de débit suffisante avec une homogénéité de la distribution de débit conforme au critère attendu sur toute la fourchette de débit de fonctionnement, ce qui n'est pas le cas des systèmes existants à débordement dans la zone de transition.

Conformément à l'invention, ce but est atteint en fournissant un dispositif de double distribution de liquide utile dans tout type d'appareil vertical siège d'écoulement gravitaire d'une phase liquide nécessitant d'être distribuée de manière homogène dans au moins une zone située dessous le dit dispositif de double distribution de liquide, ladite zone s'étendant sur au moins une section orthogonale à l'axe vertical dudit appareil à écoulement gravitaire, le dispositif de distribution de liquide comprenant un plateau collecteur supérieur relié à un support de rampes par au moins deux conduits longitudinaux de descente de liquide, le dit support de rampes supportant au moins deux séries de rampes tubulaires transversales et permettant l'alimentation en liquide de la première série de rampes par un premier conduit longitudinal et respectivement la deuxième série de rampes par un deuxième conduit longitudinal, chaque rampe comportant des orifices de distribution en sous face aptes à distribuer le liquide sur une dite zone située en dessous des dites rampes du dispositif de double distribution de liquide, la forme du plateau collecteur étant apte à canaliser un liquide sur le plateau collecteur vers une ouverture supérieure du premier conduit longitudinal, et l'ouverture supérieur du deuxième conduit arrivant à un niveau dépassant au-dessus du dit plateau collecteur, caractérisé en ce que les deux conduits longitudinaux de descente de liquide sont reliés l'un à l'autre en partie basse par un dispositif de communication équipé d'une vanne à ouverture commandée apte à permettre le transfert du liquide entre les deux conduits longitudinaux de façon contrôlée ladite vanne présentant un déclenchement de son ouverture ou de sa fermeture uniquement basé sur la mesure du niveau de liquide dans lesdits premier et deuxième conduits.

En particulier, le dit appareil à écoulement gravitaire est une colonne de fractionnement ou de lavage comprenant au moins un lit de garnissage dans une dite zone s'étendant sur la section transversale de la dite colonne perpendiculairement à la direction longitudinale axiale ZZ' de la dite colonne.

De façon connue, un lit de garnissage est un milieu solide poreux au sein duquel les éléments solides qui le constituent offrent une très grande surface de contact avec le fluide en écoulement, la fonction d'un lit à garnissage étant de maximiser la surface de contact entre une phase vapeur et phase liquide de manière à approcher au mieux l'équilibre thermochimique entre ces deux phases. La structure de ce milieu solide peut être organisée (dénommé « garnissage structuré »), constitué typiquement d'une structure métallique et modulaire permettant d'atteindre des surfaces relatives élevées tout en offrant une forte porosité aux écoulements de fluides. La structure d'un garnissage peut également être aléatoire (dénommé « garnissage en vrac »), constitué de petits éléments solides de formes particulière de 1 à 2 cm par exemple, utilisés pour remplir le volume à garnir dans un assemblage aléatoire.

On entend ici par « direction transversale », une direction perpendiculaire à la direction axiale longitudinale ZZ' commun du dispositif et de l'appareil vertical à écoulement gravitaire tel que colonne ou échangeur bobiné par exemple.

On comprend que :
- les deux conduits sont dits longitudinaux en ce qu'ils s'étendent parallèlement dans une même direction longitudinale parallèle à une direction longitudinale axiale ZZ' du dispositif, et
- le plateau collecteur supérieur s'étend sur la section transversale dudit appareil à écoulement gravitaire, notamment d'une dite colonne,
- le plateau collecteur supérieur permet l'alimentation en liquide uniquement du premier conduit et non celle du deuxième conduit, tant que le niveau de liquide sur le plateau collecteur reste inférieur au niveau de l'ouverture supérieure du deuxième conduit,
- la répartition des orifices de distribution et disposition des dites rampes permet de distribuer du liquide de façon régulière et homogène sur toute la surface de la section transversale du dispositif dans ladite zone, notamment donc de la surface supérieure du lit de garnissage d'une dite colonne, et
- le premier conduit et les premières rampes forment un premier distributeur et le deuxième conduit et les deuxièmes rampes forment un deuxième distributeur.

Un dispositif de distribution de liquide selon la présente invention permet que la différence relative des charges hydrauliques vue respectivement par deux points diamétralement opposés des rampes de distribution soit limitée; la limitation de cette différence relative de charge étant obtenue en faisant en sorte que la moyenne des deux charges soit suffisamment grande par rapport à leur différence. L'homogénéité de la distribution de liquide repose donc sur le principe d'une minimisation des écarts de charge statique. Par ailleurs, si le dispositif comporte deux séries de rampes, chaque série couvre la totalité de la surface transversale de l'appareil vertical (colonne ou échangeur).

Plus particulièrement, pour une série d'orifices d'une série de rampes d'un distributeur, la tolérance en terme d'homogénéité peut être quantifiée par la valeur d'un facteur d'homogénéité k= (Q'-Q")/(Q'+Q"), telle que k soit inférieur ou égal à une valeur limite k₀ donnée de préférence k₀ étant typiquement de 4 à 10%, la valeur de k₀ dépendant du service assuré par la colonne Q' étant le débit cumulé des orifices de la moitié des rampes du distributeur débitant le plus (car soumis à une hauteur de liquide supérieure à celle d'un orifice situé au centre du distributeur) et Q" étant le débit cumulé des orifices de la moitié des rampes du distributeur débitant le moins (car soumis à une hauteur de liquide inférieure à celle d'un orifice situé au centre du distributeur).

Selon la présente invention, le débordement du liquide depuis le premier conduit rempli au maximum vers l'ouverture supérieure du deuxième conduit, contrairement au dispositif classique « par débordement », n'est prévue que comme un dispositif de secours en cas de disfonctionnement de la vanne à ouverture commandée.

Plus particulièrement, le dit dispositif de communication à ouverture de vanne commandée du dispositif de distribution selon l'invention débouche dans la partie basse de chacun des premier et respectivement deuxième conduits à une hauteur inférieure à Hmin, Hmin étant la hauteur minimale requise de liquide dans les dits premier et deuxième conduits en communication au niveau de la dite vanne pour obtenir une distribution homogène de liquide entre les différents orifices des dites première et deuxième séries de rampes, de préférence le dit dispositif de communication à ouverture de vanne débouche au niveau des extrémités inférieures des premier et respectivement deuxième conduits.

Dans un mode de réalisation, le dit dispositif de communication débouche dans les dits premier et deuxième conduits au niveau de leurs extrémités inférieures.

Plus particulièrement, le déclenchement de l'ouverture ou de la fermeture de la vanne est uniquement basé sur la mesure du niveau de liquide dans les dits premier et deuxième conduit (et non pas sur une mesure de débit) de sorte que :
a) la dite vanne s'ouvre automatiquement, lorsque, à débit croissant dans le seul dit premier conduit, le niveau de liquide dans le premier conduit atteint une valeur seuil maximale Hmax, et
b) la vanne se referme automatiquement lorsque, à débit décroissant dans les deux dits premier et deuxième conduits, le niveau de liquide identique dans les deux premier et deuxième conduits en communication de par la vanne ouverte descend jusqu'à une valeur seuil minimale supérieure ou égale à la dite hauteur minimale Hmin telle que définie ci-dessus.

On comprend que Hmax est inférieure à la hauteur du deuxième conduit pour éviter les risques de débordement du liquide depuis le premier conduit vers l'ouverture supérieur du deuxième conduit.

Ces paramètres Hmin et Hmax sont des caractéristiques dimensionnelles du distributeur, calculées par le concepteur en fonction du cahier des charges (notamment de l'homogénéité de la distribution de liquide requise ou l'étendue de la variation de la distribution tolérée, en fonction de la sévérité des mouvements, c'est à dire de l'amplitude des mouvements possibles, et/ou l'étendue des fourchettes de débit à couvrir. Ils deviennent ensuite des seuils de déclenchement de ladite vanne de niveau en opération.

De préférence, dans un dispositif selon l'invention, les premier et deuxième distributeurs sont configurés de telle sorte que ;
a) Q₂min soit inférieur ou égal à Q₁max-Q₁min,
   - les premier et deuxième distributeurs étant définis comme consistant dans :
      - le premier conduit et les orifices de la première série de rampes, pour le premier distributeur, et
      - le deuxième conduit et les orifices (8c) de la deuxième série de rampes, pour le deuxième distributeur; et
   - Q₁min et Q₂min étant définis comme les débits cumulés minimaux des orifices de la première série de rampes, et respectivement de la deuxième série de rampes, permettant une distribution homogène de liquide par les dites première et deuxième séries de rampes, et
   - Q₁max étant défini comme le débit maximal du premier distributeur lorsque la hauteur de liquide dans le premier conduit est de valeur maximale Hmax, et
b) lorsqu'on ouvre la dite vanne et on met en communication les deux conduits longitudinaux, le niveau du liquide dans le premier conduit qui était de valeur maximale Hmax redescende jusqu'à un niveau de liquide dans le deuxième conduit H₀ identique à celui du premier conduit, H₀ étant supérieure ou égale à Hmin, Hmin étant la hauteur commune minimale requise de liquide dans les dits premier et deuxième conduits en communication au niveau de la dite vanne pour obtenir une distribution homogène de liquide entre les différents orifices des dites première et deuxième séries de rampes.

Ces paramètres de Débit Qxmin et Qxmax, associés aux hauteur de liquide correspondantes sont des caractéristiques qui induisent des nombres et des tailles d'orifice à pratiquer dans les rampes de distribution de liquide lors de leur fabrication, propres à chaque cas d'application, calculés par le concepteur en fonction du cahier des charges (homogénéité de la distribution de liquide requise ou étendue de la variation de la distribution tolérée, sévérité/amplitude des mouvements possibles, étendue des fourchettes de débit à couvrir...).

De préférence encore, les premier et deuxième distributeurs sont configurés de telle sorte que le débit correspondant au seuil de déclenchement Hmax d'ouverture de la dite vanne en débit croissant pour passer du mode de fonctionnement avec le seul premier distributeur en action au mode de fonctionnement en double distribution avec les deux premier et deuxième distributeurs en action, de préférence Q₁max tel que défini ci-dessus, soit supérieur au débit correspondant au seuil de déclenchement de la fermeture de la vanne en débit décroissant Hmin pour passer du mode de fonctionnement en double distribution avec les deux premier et deuxième distributeurs en action au mode de fonctionnement avec le seul premier distributeur en action, de préférence Q₁min+Q₂min tels que définis ci-dessus. Dans ce mode de réalisation, par le fait même de la calibration des débits des deux rampes, le dispositif fonctionne avec une hystérésis qui se caractérise par le fait que les débits correspondant aux deux seuils de déclenchement de commande Hmax en ouverture et respectivement Hmin en fermeture de la vanne sont différents pour éviter les phénomènes d'oscillation intempestifs entre le mode de fonctionnement « mono-distributeur » et le mode « distributeur double » comme explicité plus loin.

Plus particulièrement, pour obtenir cette hystérésis, les premier et deuxième distributeurs sont configurés de telle sorte que :
a) Q₂min soit inférieur à Q₁max-Q₁min, et
b) H₀ est supérieure à Hmin mais inférieure à Hmax.

Plus particulièrement encore, le plateau collecteur comporte des rigoles canalisant le liquide vers l'ouverture supérieure du premier conduit vertical.

Plus particulièrement, les rampes tubulaires transversales s'étendent parallèlement dans une direction transversale perpendiculaire à une direction longitudinale axiale ZZ' du dispositif de double distribution. La disposition des rampes pourrait toutefois être différente avec des rampes en forme d'anneaux concentriques par exemple.

Plus particulièrement, les deux séries de rampes sont disposées à un même niveau dans la direction longitudinale (ZZ') du dispositif de double distribution, les rampes de la première série étant intercalées parallèlement entre les rampes de la deuxième série.

La présente invention est applicable à une colonne de fractionnement, de lavage, un échangeur vertical de type bobiné ou tout type d'appareil vertical embarqué sur un navire ou support flottant comprenant au moins un dispositif de double distribution de liquide selon l'invention disposé à l'intérieur de la paroi cylindrique de l'appareil et coaxialement et au-dessus d'une section transversale dudit appareil perpendiculairement à la direction longitudinale axiale (ZZ') de la dite paroi cylindrique.

Plus particulièrement, le dit plateau collecteur est disposé transversalement et coaxialement à la dite paroi cylindrique de l'appareil. On comprend que le contour du plateau collecteur suit le contour de la section transversale de la dite paroi cylindrique.

Plus particulièrement encore, l'appareil peut comporter la nécessité de pratiquer plusieurs fois (à plusieurs niveaux) des distributions de la phase liquide comme c'est notamment le cas d'une colonne comprenant une pluralité de lits de garnissage s'étendant sur la section transversale de la dite colonne et espacés les uns des autres dans la direction longitudinale axiale (ZZ') de la dite colonne, avec une pluralité de dits dispositifs de double distribution de liquide intercalés chacun entre deux lits de garnissage; dans le cas d'un échangeur bobiné comportant plusieurs faisceaux, il y aura de la même manière plusieurs dispositifs de double distribution au-dessus de chaque faisceau

La présente invention fournit également un procédé de distribution de liquide à l'aide d'un dispositif de double distribution de liquide selon l'invention recevant un liquide sur le dit plateau collecteur supérieur caractérisé en ce qu'on réalise les étapes dans lesquelles :
e.1) on remplit le premier conduit longitudinal de liquide, et
e.2) lorsque le niveau de liquide dans le premier conduit atteint une valeur seuil maximale, on ouvre la dite vanne et on met en communication les deux conduits longitudinaux et on remplit ainsi le deuxième conduit à un même niveau de liquide que le premier conduit, et
e.3) on referme la dite vanne si le dit niveau de liquide identique des dits premier et deuxième conduits diminue dessous une valeur seuil minimale.

Ces seuils de niveau sont des caractéristiques dimensionnelles du distributeur, calculées par le concepteur en fonction du cahier des charges (homogénéité/ étendue des variations de la distribution de liquide requise/tolérée, sévérité/amplitude des mouvements, étendue des fourchettes de débit à couvrir).

Plus particulièrement, on réalise le déclenchement automatique de l'ouverture ou de la fermeture de la vanne en fonction de la mesure du niveau de liquide dans les dits premier et deuxième conduits de sorte que :
a) à l'étape e.2), la dite vanne s'ouvre automatiquement, lorsque, à débit croissant dans le seul dit premier conduit, le niveau de liquide dans le premier conduit atteint une valeur seuil maximale Hmax, et
b) à l'étape e.3), la vanne se referme automatiquement lorsque, à débit décroissant dans les deux dits premier et deuxième conduits, le niveau de liquide identique dans les deux premier et deuxième conduits en communication de par la vanne ouverte descend jusqu'à une valeur seuil minimale supérieure ou égale à Hmin, Hmin étant la hauteur commune minimale requise de liquide dans les dits premier et deuxième conduits en communication au niveau de la dite vanne pour obtenir une distribution homogène de liquide entre les différents orifices des dites première et deuxième séries de rampes.

Cette hauteur Hmin est induite par des débits homogènes minimaux cumulés Q₁min et Q₂min des orifices de la première série de rampes, et respectivement de la deuxième série de rampes.

De préférence, à l'étape e.2), on ouvre la dite vanne et met en communication les deux conduits longitudinaux de sorte que le niveau du liquide dans le premier conduit qui était de valeur maximale Hmax redescende jusqu'à un niveau de liquide dans le deuxième conduit H₀ identique à celui du premier conduit, H₀ étant supérieure ou égale à Hmin et correspondant à un débit du deuxième distributeur supérieur ou égal à Q₂min; les premier et deuxième distributeurs étant configurés de telle sorte que :
a) Q₂min soit inférieur ou égal à Q₁max-Q₁min,
   - les premier et deuxième distributeurs étant définis comme consistant dans :
      - le premier conduit (5) et les orifices (8c) de la première série de rampes, pour le premier distributeur, et
      - le deuxième conduit (6) et les orifices (8c) de la deuxième série de rampes, pour le deuxième distributeur; et
   - Q₁min et Q₂min étant définis comme les débits cumulés minimaux des orifices de la première série de rampes, et respectivement de la deuxième série de rampes, permettant une distribution homogène de liquide par les dites première et deuxième séries de rampes, et
   - Q₁max étant défini comme le débit maximal du premier distributeur lorsque la hauteur de liquide dans le premier conduit est de valeur maximale Hmax, et
b) lorsqu'on ouvre la dite vanne et met en communication les deux conduits longitudinaux, le niveau du liquide dans le premier conduit qui est de valeur maximale Hmax redescende jusqu'à un niveau de liquide dans le deuxième conduit H₀ identique à celui du premier conduit, H₀ étant supérieure ou égale à Hmin définie ci-dessus.

De préférence encore, à l'étape e.2), on ouvre la dite vanne et met en communication les deux conduits longitudinaux (5,6) de sorte que le niveau du liquide H₁ dans le premier conduit qui était maximal de valeur Hmax redescende jusqu'à un niveau de liquide dans le deuxième conduit H₀ identique à celui du premier conduit, H₀ étant supérieure à Hmin et correspondant à un débit du deuxième distributeur supérieur à Q₂min; les premier et deuxième distributeurs étant configurés de telle sorte que :
a) Q₂min soit inférieur à Q₁max-Q₁min, et
b) lorsqu'on ouvre la dite vanne et met en communication les deux conduits longitudinaux, le niveau du liquide dans le premier conduit qui était de valeur Hmax redescende jusqu'à un niveau de liquide dans le deuxième conduit H₀ identique à celui du premier conduit, H₀ étant supérieure à Hmin.

Si H0 est supérieure à Hmin, il est alors avantageusement possible de faire fonctionner le dispositif avec une hystérésis qui se caractérise par deux seuils distincts de niveau de liquide pour les déclenchements en ouverture et fermeture de la vanne de communication pour éviter les phénomènes d'oscillation intempestifs entre le mode de fonctionnement « mono-distributeur » et le mode « distributeur double » comme explicité plus loin.

De préférence, en effet, le débit au seuil de déclenchement d'ouverture de la dite vanne en débit croissant pour passer du mode de fonctionnement avec le seul premier distributeur en action au mode de fonctionnement en double distribution avec les deux premier et deuxième distributeurs en action, est supérieur au débit au seuil de déclenchement de la fermeture de la vanne en débit décroissant pour passer du mode de fonctionnement en double distribution avec les deux premier et deuxième distributeurs en action au mode de fonctionnement avec le seul premier distributeur en action.

Dans ce cas, un procédé selon l'invention peut comprendre les étapes suivantes dans lesquelles :
1) le niveau de liquide croit dans le seul premier conduit, et
2) on ouvre la dite vanne lorsque le niveau de liquide atteint le seuil de hauteur maximale Hmax dans le premier conduit correspondant à un débit homogène maximal du premier distributeur Q₁max et on met en communication les deux conduits longitudinaux de sorte que le niveau du liquide dans le premier conduit qui était de valeur maximale Hmax redescende jusqu'à un niveau de liquide dans le deuxième conduit H₀ identique à celui du premier conduit, H₀ étant supérieur à la dite valeur Hmin, et
3) le niveau de liquide croît à partir de H₀,dans les deux premier et deuxième conduits le dispositif étant désormais en mode de fonctionnement de distribution double avec les deux premier et deuxième distributeurs en action, le débit cumulé des deux distributeurs augmente de Q₁max à Q₁max+ Q₂max, Q₂max étant défini comme le débit maximal du deuxième distributeur lorsque la hauteur de liquide identique dans les premier et deuxième conduit est maximale Hmax; et
4) lorsque le dispositif est en mode de fonctionnement de distribution double avec les deux premier et deuxième distributeurs en action, le débit étant entre Q₁max et Q₁max+ Q₂max, si le débit décroît on ne ferme la dite vanne que lorsque le débit atteint une valeur seuil minimale Q₀ entre Q1min et Q₁max avec un niveau du liquide Hmin dans les deux conduits, Q₀ étant supérieur ou égal à Q₁min+Q₂min de préférence égal à Q₁min+Q₂min, et
5) après fermeture de la dite vanne, le niveau de liquide dans le premier conduit remonte à une valeur H₁ supérieure à Hmin mais inférieure à Hmax avec un débit entre Q₁min et Q₁max, le dispositif reste en mode de fonctionnement de distribution simple avec le seul premier distributeur en action tant que le niveau de liquide ne dépasse pas Hmax dans le premier conduit.

Dans la présente description et comme montré dans les figures, les hauteurs de liquide dans les premier et deuxième conduits, H1, H2, Hmin et Hmax s'entendent de hauteurs par rapport à la base du distributeur définie par le plan horizontal passant par le fond des conduits et des rampes.

Hmax et Hmin sont des caractéristiques dimensionnelles du distributeur, qui sont calculées en vue d'atteindre une certaine performance en termes d'homogénéité de distribution de liquide, pour des conditions de sévérité de mouvements données et des gammes de débits définies par le cahier des charges.

En opération, la mesure du niveau dans les conduits verticaux du distributeur est utilisée pour piloter la vanne ; mais les seuils de déclenchement Hmin et Hmax de la vanne sont donc des caractéristiques intrinsèques de l'appareillage.

Les paramètres de débits et de hauteurs de liquide selon l'invention sont donc des caractéristiques de calibration de l'appareillage. L'homme du métier sait en effet qu'un dispositif de ce type se caractérise nécessairement dans sa structure pour satisfaire les propriétés en lien avec la définition des fourchettes de débit Qmin, Qmax, garantissant une distribution de liquide homogène en fonction notamment des nombre et taille des trous à pratiquer dans les rampes de distribution ou diamètre des rampes de distribution. La technique permettant de déterminer ces caractéristiques est connue de l'homme du métier et n'est pas l'objet de l'innovation.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue d'une colonne 10 de fractionnement comprenant une pluralité de distributeurs de liquide 1 coopérant avec une pluralité de lits de garnissage 9. Sur la figure 1, le lit de garnissage 9 s'étend du trait pointillé supérieur dessous un distributeur supérieur jusqu'au double trait pointillé situé plus bas (au-dessus du plateau à cheminée du distributeur inférieur.
- les figures 2A, 2B et 2C sont des vues d'un dispositif distributeur de liquide double à débordement avec deux conduits verticaux 5 et 6 disposés côte à côte à proximité et symétriquement par rapport à l'axe central ZZ' selon la technique antérieure, en vue en perspective (figure 2A), de côté (figure 2B), en vue de dessus (figure 2C),
- les figures 3A et 3B-3C sont des vues d'un distributeur de liquide double montrant de façon schématique la coopération entre les deux systèmes de distribution avec deux dispositions différentes des deux séries de rampes 8a et 8b les unes par rapport aux autres,

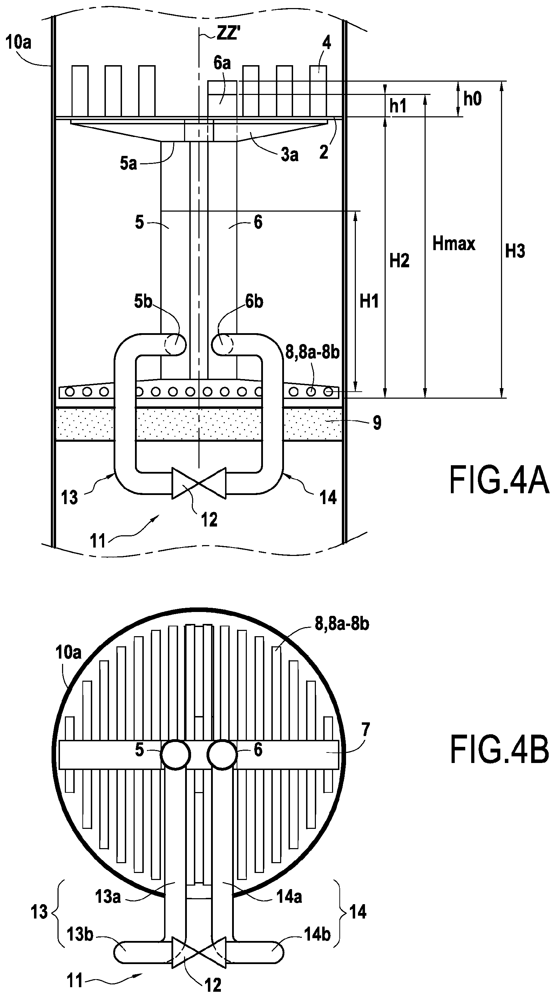

- les figures 4A et 4B sont des vues d'un distributeur de liquide double selon l'invention avec un dispositif de communication contrôlée 11 entre les deux conduits 5 et 6, en vue de côté (figure 4A) et en vue de dessus (figure 4B), et
- les figures 5A et 5B sont des graphes montrant l'évolution du paramètre d'homogénéité k selon le débit dans le premier conduit dans un distributeur double de la technique antérieure (figure 5A) et selon l'invention (figure 5B);

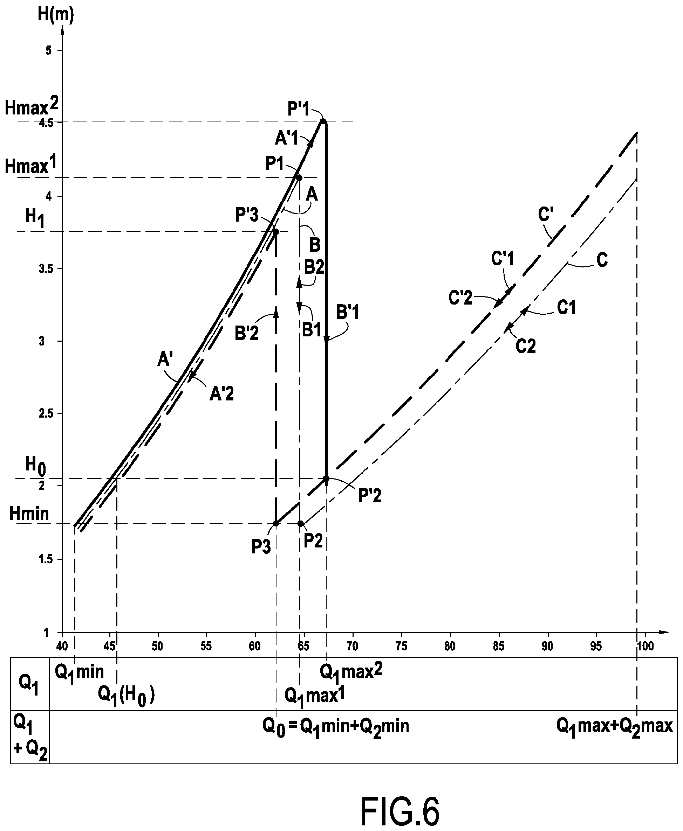

- la figure 6 représente des graphes montrant l'évolution de la hauteur de liquide en fonction du débit illustrant le fonctionnement d'un dispositif selon l'invention avec un même seuil d'ouverture ou fermeture de vanne (sans hystérésis : courbes A, B et C) et avec deux seuils distincts d'ouverture et respectivement fermeture de vanne (avec hystérésis : courbes A', B'1/B'2, C').

### Description détaillée de l'invention

Sur la figure 1, on a représenté une colonne de fractionnement ou séparation de phases 10 à paroi cylindrique 10a comprenant 3 dispositifs de distribution de liquide 1 disposés coaxialement au-dessus respectivement de 3 lits à garnissage 9 occupant la totalité de la section circulaire de la colonne. Ces garnissages peuvent être de type « structuré » tel que les garnissages structurés « Mellapak^{™} » de la société SULZER (CH) ou « FLEXIPAC^{®} » de la société KOCH GLITSCH (USA) ou des garnissages en vrac « INTALOX^{®} » ou « IMTP^{®} » de la société KOCH GLITSCH (USA).

Sur les figures 2A-2C ainsi que 3A-3C et 4A-4B, on a représenté un dispositif de double distribution de liquide 1 utile dans une colonne de fractionnement ou de lavage 1) comprenant au moins un lit de garnissage 9 s'étendant sur la section transversale de la dite colonne perpendiculairement à la direction longitudinale axiale ZZ' de la dite colonne. Le dispositif de distribution de liquide 1 comprend de bas en haut :
- un plateau collecteur supérieur 2 de contour circulaire de diamètre égal à celui de la paroi cylindrique 10a, le plateau 2 comportant une surface plane horizontale (perpendiculaire à ZZ') comportant deux rigoles à fonds inclinés disposées diamétralement en croix 3a et 3b qui piègent le liquide et le dirige en pente vers un premier conduit de descente de liquide 5, le plateau supportant aussi des cheminées 4 permettant la remontée de la phase vapeur (cheminées dont les chapeaux ne sont pas représentés sur les figures) ;
- deux conduits longitudinaux 5 et 6 de descente de liquide parallèles disposés symétriquement à proximité de l'axe ZZ' des plateau 2 et colonne 10, reliant le dit plateau 2 à un support de rampes 7, l'ouverture supérieure 5a du premier conduit longitudinal 5 arrivant au niveau du fond des rigoles 3a-3b, l'ouverture supérieur 6a du deuxième conduit arrivant à un niveau dépassant de h0 au-dessus du dit plateau collecteur 2,
- le dit support de rampes 7 disposé diamétralement supportant deux séries de rampes tubulaires transversales 8, 8a-8b disposées perpendiculairement à l'axe ZZ' (horizontalement) et parallèlement entre elles, et
- une première série de rampes 8a est alimenté exclusivement par le premier conduit longitudinal 5 et une deuxième série de rampes 8b est alimentée exclusivement respectivement par le deuxième conduit longitudinal 6, chaque rampe 8, 8a-8b comportant des orifices de distribution 8c disposés en sous face aptes à asperger du liquide 8d sur la face supérieure du lit de garnissage 9 dessous le dispositif de double distribution de liquide.

Sur la figure 3A, selon un mode préféré de réalisation, les rampes 8a du premier conduit 5 sont intercalées sur un même niveau entre les rampes 8b vides du deuxième conduit 6 lequel dépasse en hauteur le premier conduit.

Sur les figures 3B et 3C, on a représenté les rampes 8a du premier conduit 5 intercalées en quinconce entre les rampes 8b du deuxième conduit 6 mais disposées à un niveau juste au-dessus des rampes 8b pour mieux faire comprendre le principe de fonctionnement des deux séries de rampes et mieux identifier la correspondance entre rampes et conduite, chacune étant alimentée exclusivement par un conduit vertical. Mais, en pratique, les rampes d'un double distributeur sont toutes à la même élévation.

Sur la figure 3B, le dispositif fonctionne en mode simple ou « mono-distributeur », seul le premier conduit 5 et les premières rampes 8a étant remplies de liquide en aspersion 8d à travers les orifices 8c. Sur la figure 3C, le dispositif fonctionne en mode double, les deux conduits 5 et 6 et deux séries de rampes 8a et 8b sont ici entièrement remplies de liquide en débits maximaux.

Sur les figures 4A et 4B, on a représenté un distributeur de liquide double selon l'invention identique à celui des figures 2 et 3 mais équipé en outre avec un dispositif de communication 11 entre les deux conduits 5 et 6, comprenant une vanne d'ouverture ou fermeture commandée 12. Le dispositif de communication 11 comprend deux conduits coudés à multiples coudes 13 et 14 et une vanne 12. Les deux conduits coudés 13 et 14 assurent la liaison entre la vanne 12 étant disposée à l'extérieur de la paroi 10a et une partie basse du premier conduit 5 et respectivement du deuxième conduit 6. Les deux conduits coudés 13 et 14 sont disposés symétriquement par rapport à la vanne 12 avec des parties 13a et 14a reliées aux conduits 5 et 6 disposées à l'intérieur de la paroi 10a et des parties 13b et 14b reliées à la vanne 12 disposées à l'extérieur de la paroi 10a.

Pour des raisons pratiques de maintenance, la vanne 12 a été positionnée à l'extérieur de la paroi 10a. Mais il serait également envisageable que la dite vanne reste à l'intérieure de la paroi 10a. Par ailleurs, la forme des conduits 13 et 14 pourrait être différente sans changer le principe de l'invention. En revanche, la vanne 12 doit être positionnée en point bas, sans « poches » sur le cheminement des éléments de conduits 13 et 14 pour que, dans le cas où le distributeur est utilisé avec des liquides cryogéniques, les bulles de vapeurs produites par l'évaporation du liquide dans les bras morts puissent être évacuées naturellement vers l'intérieur de la colonne. D'autre part, pour ne pas risquer de désamorcer l'écoulement, sachant que le liquide est à son point de bulle, l'élévation des éléments de conduits 13 et 14 devra rester inférieur à Hmin, c'est à dire ici que les parties 13a et 14a doivent cheminer en restant à une élévation inférieure à celle correspondant au niveau de liquide Hmin.

La hauteur du deuxième conduit H₃ est égal à H₂ la hauteur du premier conduit + h₀, la hauteur de dépassement du deuxième conduit, h₀ étant en pratique de l'ordre de 10% de H₂.

La hauteur minimale de liquide Hmin requise dans les deux conduits 5 et 6 pour alimenter tous les orifices des deux séries de rampes 8a et 8b dépend de l'amplitude des inclinaisons, en pratique de l'ordre de 5° à 20°, de la dimension des rampes (longueur et diamètre) et de la fourchette requise ou ratio entre débit minimal Qmin et débit maximal Qmax. Ainsi, le nombre et la dimension des trous 8c ainsi que la hauteur des premier conduit 5 et deuxième conduit 6 sont déterminés pour fournir les débits homogènes minimaux Q₁min, Q₂min voulus à la dite hauteur minimale de liquide Hmin et les débits homogènes maximaux Q₁max, Q₂max voulus à une hauteur maximale de liquide Hmax.

La hauteur minimum Hmin peut se calculer à partir du diamètre D de la colonne qui détermine les longueurs des rampes, et à partir d'un critère d'écart relatif de débits « E », dû au mouvement du flotteur, cet écart de débit étant celui entre un orifice central et un orifice « extrême » d'une rampe et de l'angle « alpha dynamique » défini par le secteur angulaire formé par le vecteur accélération et l'axe ZZ' dans le référentiel du navire. Ainsi, Hmin= D x 0.5 tg(alpha)x(1/( (1+E)²-1). Le nombre et la taille des orifices seront calculés pour que le distributeur puisse passer le débit Qmin sous une hauteur Hmin en garantissant une homogénéité suffisante. L'homogénéité visée (facteur k0) détermine donc le ratio Hmin/D requis.

La hauteur maximale de liquide Hmax dans le distributeur résulte du débit minimal Qmin et du ratio Qmax/Qmin à savoir Hmax/D= (Qmax/Qmin)² x Hmin/D). Typiquement, le ratio Qmax/Qmin est de 100/40. A titre illustratif, pour un écart E maxi de 8.5% et un angle alpha de 10°, Hmin est de 0.5xD. Typiquement Hmax/D est de 0.5 à 1.5. Typiquement D est de 4 à 5m et E= 5 à 15%.

L'homogénéité visée (facteur k0) détermine le ratio Hmin/D requis. Mais, le ratio Hmin/D effectif dépendra ultérieurement du débit effectif à laquelle la colonne sera opérée, le critère d'homogénéité ne pouvant être conforme pour l'angle inclinaison considéré lors du dimensionnement que pour un débit supérieur ou égal au débit minimum Qmin pris en compte dans le dit dimensionnement.

Sur les figures 5A et 5B, les distributeurs sont calibrés avec une longueur maximale des rampes de 4.15m et Q1min / (Q1max + Q2max)=40% pour que k₀ soit de 4.5%.

Sur la figure 5A, on montre que dans un distributeur double à débordement de la technique antérieure, en situation d'inclinaison maximale, quand on augmente la hauteur de liquide dans le premier conduit, les différents stades successifs suivants se réalisent :
- courbe A : le débit du premier distributeur passe de Q1min de 42% à Q1 max de 65% quand le niveau de liquide passe de Hmin à Hmax dans le premier conduit, l'homogénéité de la distribution entre les différents orifices du distributeur augmente car k diminue au-dessous de k0, puis
- courbes B et C: le liquide déborde du premier conduit et se déverse dans le deuxième conduit, le débit cumulé des deux distributeurs augmente jusqu'à une fourchette (courbe C) de Q*=66.58% à Q**=75.7%, dans laquelle fourchette on est en dessous de la hauteur minimale requise Hmin dans le deuxième conduit de sorte que la distribution n'est pas suffisamment homogène, l'hétérogénéité augmente, k dépasse k0 =4.5% jusqu'à 7%, puis
- courbe D: la hauteur de liquide dans le deuxième conduit dépasse Hmin et le débit cumulé augmente, k diminuant jusqu'à une valeur minimale de 1.5% quand le débit maximal cumulé est atteint (Q₁max+Q₂max).

Dans ce mode de réalisation antérieur, sur la gamme de débit opératoire de Q₁min à Q₁max+Q₂max, on se trouve donc avec une largeur de bande de débit entre Q' et Q" de quasiment 10% (si Q₁max+Q₂max=100%) en plein milieu de la gamme de débit de fonctionnement qui dépasse la tolérance d'homogénéité requise.

Sur la figure 5B et la figure 6 (courbes A, B, C sans hystérésis en traits fins), on montre que dans un distributeur double selon l'invention avec un dispositif de communication 11 à ouverture de vanne commandée 12, en situation d'inclinaison maximale, quand on augmente la hauteur de liquide dans le premier conduit, le deuxième distributeur étant calibré hydrauliquement pour écouler la différence de débit Q₂min=Q1max-Q1min sous une hauteur de liquide Hmin, les différents stades suivants se réalisent :
- Courbe A : le débit passe de 0 à Q₁max, le niveau de liquide passant de 0 à Hmax¹ (en passant par Hmin pour Q₁min) dans le premier distributeur en fonctionnement mono-distributeur, l'homogénéité de la distribution entre les différents orifices du premier distributeur augmente car k diminue au-dessous de k₀, puis au point P₁,
- Courbe B : On ouvre la vanne de communication inférieure 12, entre les deux conduits, le liquide se transvase par cette vanne du premier conduit vers le deuxième conduit, jusqu'à ce que, au point P₂, la hauteur de liquide passe quasi instantanément identique dans les deux conduits à H0=Hmin, le débit passant de Q₁max= Q₁max ¹ à Q₁min dans le premier distributeur et de 0 à Q₂min=Q₁max¹-Q₁min dans le deuxième distributeur, si bien que le débit cumulé des deux distributeurs reste en P₂ inchangé quasiment égal à Q₁max= Q₁max¹, puis
- Courbe C : Lorsque le débit cumulé des deux distributeurs augmente de Q₁max¹ à (Q₁max+Q₂max), la hauteur de liquide dans les deux conduits augmente de manière identique et concomitante de Hmin à Hmax¹ et, k diminuant jusqu'à une valeur minimale de 1.5% quand le débit maximal cumulé est atteint.

Hmax=H2+h₁, h1 étant la hauteur maximale de liquide autorisée sur le plateau collecteur 2, h₁ étant inférieur à h₀ pour éviter les débordements intempestifs de liquide dans le deuxième conduit avant l'ouverture de la vanne 12.

Dans ce mode de réalisation selon l'invention, le cycle d'ouverture et fermeture de la vanne en débits croissants et respectivement décroissants est sans hystérésis, le seuil de déclenchement de la vanne étant identique pour l'ouverture en P1 de la vanne lorsqu'on est en débit croissant dans les sens de B1 à C1 et pour la fermeture en P2 de la vanne lorsqu'on est en débit décroissant dans les sens de C2 puis B2.

Sur la figure 6, on montre aussi le fonctionnement avantageux d'une variante de calibration d'un distributeur double selon l'invention dite à hystérésis. Dans cette variante avantageuse, pour éviter un risque d'instabilité de fonctionnement au voisinage du débit d'ouverture/ fermeture de la vanne et passage entre le mode « mono-distributeur » et le mode « double distributeur », on configure le dispositif pour pouvoir réaliser une hystérésis de sorte que le débit Q₁max= Q₁max² correspondant au seuil de déclenchement Hmax² d'ouverture de la vanne en débit croissant soit supérieur au débit (Q1min+Q2min) correspondant au seuil de déclenchement Hmin de la fermeture de la vanne en débit décroissant. Le fait que ces deux seuils de commande de la vanne de communication Hmin et Hmax corresponde à deux débits différents Q₁max et (Q₁min+Q₂min) permet d'éviter les phénomènes d'oscillation intempestifs entre le mode de fonctionnement « mono-distributeur » et le mode « distributeur double ».

Pour ce faire, on calibre hydrauliquement le deuxième distributeur pour garantir un niveau de liquide Hmin non pas pour un débit Q₂min= Q₁max-Q₁min mais pour une fraction de Q₁max-Q₁min, c'est-à-dire Q₂min= r x (Q₁max-Q₁min) avec r inférieur à 1.

Sur la figure 6, les différents stades suivants se réalisent :
- Courbe A' sens A'1: le débit passe de 0 à Q₁ max², le niveau de liquide passant de 0 à Hmax² (en passant par Hmin pour Q₁min) dans le premier distributeur en fonctionnement mono-distributeur, l'homogénéité de la distribution entre les différents orifices du premier distributeur augmente car k diminue au-dessous de k₀, puis au point P'₁,
- Courbe B'1: On ouvre la vanne de communication inférieure 12, entre les deux conduits 5 et 6, le liquide se transvase par cette vanne du premier conduit vers le deuxième conduit, jusqu'à ce que la hauteur de liquide devienne quasi instantanément identique dans les deux conduits à H₀ supérieure à Hmin, le débit passe de Q₁max² à Q₁(H₀) avec Q₁(H₀)>Q₁min dans le premier distributeur et passe de 0 à Q₂(H₀)=(Q₁max²-Q₁(H₀)) avec (Q₁max²-Q₁(H₀))<(Q₁max²-Q₁min) dans le deuxième distributeur, si bien que le débit cumulé des deux distributeurs est au début inchangé quasiment égal à Q₁max= Q₁max², puis au point P'₂, et
- Courbe C' dans le sens C'1: le dispositif fonctionne en mode de distribution double avec les deux distributeurs. Lorsque le débit cumulé des deux distributeurs augmente de Q₁max² à (Q₁max+Q₂max), la hauteur de liquide dans les deux conduits augmente de manière identique concomitante de H₀ à Hmax² et, k diminuant jusqu'à une valeur minimale de 1.5% quand le débit maximal cumulé est atteint.
- Courbe C' en sens C'2 puis B'2: lorsque le dispositif est en mode de fonctionnement de distribution double avec les deux premier et deuxième distributeur en action, le débit étant entre Q₁max² et Q₁max+Q₂max, si le débit décroît on ne ferme la dite vanne 12 en P₃ que lorsque le niveau du liquide atteint Hmin avec un débit Q₀ dans les deux conduits 5 et 6, et
- Courbe B'2 : à la fermeture de la vanne 12, le dispositif passe en mode de fonctionnement de distribution simple avec le seul premier distributeur en action en P'₃, le niveau de liquide dans le premier conduit remonte à une valeur H1 inférieure à Hmax² avec un débit Q₀ = (Q₁min+Q₂min) entre Q₁min et Q₁max², et
- Courbe A' sens A'2 : le premier distributeur restera en fonctionnement en mode mono-distributeur, si le débit décroit encore de Q₀ à 0 ou tant que le débit reste inférieur à Q1max².

Dans les deux modes de réalisation de la figure 6 (avec et sans hystérésis), le dispositif est calibré pour un même débit maximal de saturation Q₁max¹+Q₂max¹ (sans hystérésis)=Q₁max²+Q₂max² (avec hystérésis). Par ailleurs Q1max²>Q1max¹ et Q2max²<Q2max¹.

Toutefois, dans le cas où il y a une hystérésis, on doit faire fonctionner le premier distributeur avec une charge de liquide plus élevée avant d'ouvrir la vanne (Hmax² est supérieur à Hmax¹). En outre, le deuxième distributeur est calibré pour un débit inférieur au cas « sans hystérésis »: sachant que r est choisi tel que 0<r<1, alors Q₂min=r x (Q₁max-Q₁min) avec hystérésis < Q₂min= Q₁max-Q₁min sans hystérésis. En effet, lorsque le débit total décroit en partant de 100% soit (Q₁max+Q₂max), le seuil de débit en P₃ correspondant à la fermeture de la vanne -pour une hauteur Hmin- doit être plus faible que dans le cas « sans hystérésis » en P₂.

Dans les deux modes de réalisation de la figure 6 (avec et sans hystérésis), l'homogénéité de la distribution reste conforme à la tolérance d'homogénéité requise avec k inférieur à k₀ sur toute la gamme de débit opératoire de Q₁min à (Q₁max+ Q₂max). Pour un même débit de saturation (Q₁max+ Q₂max), la hauteur Hmax sera légèrement supérieure à celle d'un distributeur double à débordement. En effet, pour un distributeur double à ouverture de vanne commandée selon l'invention ainsi calibré, le rapport Hmax/Hmin est égal au rapport des débits Qmax/Qmin alors que pour un mono distributeur ce même rapport Hmax/Hmin est égal au carré du rapport des débits maxi et mini.

Sur la figure 6, pour les configurations « sans » puis « avec » hystéresis respectivement, c'est la longueur des conduits 5 et 6 donc l'élévation du plateau collecteur 2 par rapport aux rampes 8 qui change entre les deux configurations; mais l'épaisseur h₁ de la nappe de liquide sur le plateau 2 est la même dans les deux cas, disons 0.2m. Dans un dispositif à ouverture commandée, la nappe de liquide ne remonte jusqu'au sommet du trop-plein 6a qu'en cas de disfonctionnement de la vanne. Le trop plein 6a est un dispositif de secours dans le cas de l'invention.

Dans tous les cas, le déclenchement de l'ouverture ou de la fermeture de la vanne 12 est uniquement basée sur la mesure du niveau de liquide (et non pas sur une mesure de débit). Lorsque le niveau de liquide dans le conduit 5 atteint le seuil Hmax la vanne 12 s'ouvre, et lorsque le niveau de liquide dans les deux conduits 5 ou 6 descend jusqu'au seuil Hmin la vanne 12 se referme.

La spécificité d'un système à hystérésis tient d'une part à ce que la longueur des conduits 5 et 6 est rallongée pour accroitre la hauteur de liquide maximum du premier distributeur et ainsi obtenir une valeur Q₁max² supérieur à Q1max¹ et, d'autre part, à la calibration de la série de rampe du deuxième distributeur: cette dernière est en effet calibrée de manière à ce que le débit Q1max² atteint dans le premier distributeur seul avant l'ouverture de la vanne, engendre ensuite une hauteur de liquide H₀ (identique dans les deux conduits 5 et 6) supérieure à Hmin une fois la vanne ouverte. Dans le cas d'un système sans hystéresis, le niveau H₀ atteint juste après l'ouverture de la vanne est égal à Hmin.

Si H0 est supérieure à Hmin, le dispositif fonctionne de facto avec une hystérésis qui se caractérise par le fait que le débit Q1max² correspondant au seuil d'ouverture Hmax² de la vanne 12 est distinct est de valeur supérieure au débit Q1min+Q2min correspondant au seuil de refermeture de la même vanne 12 au niveau Hmin pour éviter les phénomènes d'oscillation intempestifs entre le mode de fonctionnement « mono-distributeur » et le mode « distributeur double ».

## Revendications

1. Dispositif de double distribution de liquide (1) utile dans tout type d'appareil vertical siège d'écoulement gravitaire d'une phase liquide nécessitant d'étre distribuée de manière homogène dans au moins une zone (9) disposée dessous le dit dispositif de double distribution de liquide et s'étendant sur au moins une section orthogonale à l'axe vertical dudit appareil à écoulement gravitaire, le dispositif de distribution de liquide (1) comprenant un plateau collecteur supérieur (2) relié à un support de rampes (7) par au moins deux conduits longitudinaux de descente de liquide (5, 6), le dit support de rampes (7) supportant au moins deux séries de rampes tubulaires transversales (8, 8a-8b) et permettant l'alimentation en liquide de la première série de rampes (8a) par un premier conduit longitudinal (5) et respectivement la deuxième série de rampes (8b) par un deuxième conduit longitudinal (6), chaque rampe (8, 8a-8b) comportant des orifices de distribution (8c) en sous face aptes à distribuer le liquide sur ladite zone située en dessous des dites rampes du dispositif de double distribution de liquide (1), la forme du plateau collecteur (2) étant apte à canaliser un liquide sur le plateau collecteur vers une ouverture supérieure (5a) du premier conduit longitudinal (5), et l'ouverture supérieur (6a) du deuxième conduit arrivant à un niveau dépassant au-dessus du dit plateau collecteur,
**caractérisé en ce que** les deux conduits longitudinaux de descente de liquide (5,6) sont reliés l'un à l'autre en partie basse (5b, 6b)
par un dispositif de communication (11) équipé d'une vanne (12) à ouverture commandée apte à permettre le transfert du liquide entre les deux conduits longitudinaux de finon contrôlée, ladite vanne présentant un déclenchement de son ouverture ou de sa fermeture uniquement basé sur la mesure du niveau de liquide dans lesdits premier et deuxième conduits.

2. Dispositif de double distribution de liquide selon la revendication 1, **caractérisé en ce que** le dispositif de communication (11) débouche dans la partie basse (5b, 6b) de chacun des premier et
respectivement deuxième conduits (5, 6) au niveau de leurs extrémités inférieures.

3. Dispositif de double distribution de liquide selon la revendication 1 ou 2, **caractérisé en ce que** le déclenchement de l'ouverture ou de la fermeture de la vanne (12) est uniquement basé sur la mesure du niveau de liquide dans les dits premier et deuxième conduit
de sorte que :
a) la dite vanne s'ouvre automatiquement, lorsque, à débit croissant dans le seul dit premier conduit (5), le niveau de liquide dans le premier conduit atteint une valeur seuil maximale Hmax, et
b) la vanne se referme automatiquement lorsque, à débit décroissant dans les deux dits premier et deuxième conduits (5, 6), le niveau de liquide identique dans les deux premier et deuxième conduits en communication par la vanne ouverte descend jusqu'à une valeur seuil minimale supérieure ou égale à Hmin, Hmin étant la hauteur minimale requise de liquide dans les dits premier et deuxième conduits en
communication au niveau de la dite vanne (12) pour obtenir une distribution homogène de liquide entre les différents orifices des dites première et deuxième séries de rampes.

4. Dispositif de double distribution de liquide selon l'une des revendications 1 à 3, **caractérisé en ce que** les rampes tubulaires transversales (8, 8a-8b) s'étendent parallèlement dans une direction transversale perpendiculaire à une direction longitudinale axiale ZZ' du dispositif de double distribution (1) et les deux séries de rampes (8a, 8b) sont disposées à un méme niveau dans la direction longitudinale (ZZ') du dispositif de double distribution (1), les rampes de la première série (8a) étant intercalées parallèlement entre les rampes de la deuxième série (8b).

5. Navire ou support flottant comprenant un appareil vertical
(10) siège d'un écoulement gravitaire d'une phase liquide comportant au moins un dispositif de double distribution de liquide selon l'une des revendications 1 à 7 disposé à l'intérieur d'une paroi cylindrique (10a) dudit appareil à écoulement gravitaire (10) et coaxialement et au-dessus d'une dite zone (9) nécessitant d'étre aspergée de manière homogène par
le liquide, ladite zone s'étendant sur la section transversale dudit appareil à écoulement gravitaire perpendiculairement à la direction longitudinale axiale (ZZ') de la dite paroi cylindrique, le dit plateau collecteur étant disposé transversalement et coaxialement à la dite paroi cylindrique et adjacent à la dite paroi cylindrique.

6. Navire ou support flottant selon la revendication 5, **caractérisé en ce que** le dit appareil à écoulement gravitaire comprend une pluralité de zones (9) s'étendant sur la section transversale de la dite colonne et espacées les unes des autres dans la direction longitudinale
axiale (ZZ') de la dite colonne, avec une pluralité de dits dispositifs de double distribution de liquide intercalés chacun entre deux lits de garnissage.

7. Navire ou support flottant selon la revendication 8 ou 6,
**caractérisé en ce que** ledit appareil à écoulement gravitaire est une colonne de fractionnement ou de lavage (10) comprenant au moins un lit de garnissage (9) s'étendant dans une dite zone sur la section transversale de la dite colonne perpendiculairement à la direction longitudinale axiale ZZ' de la dite colonne.

8. Procédé de distribution de liquide à l'aide d' un dispositif de double distribution de liquide selon l'une des revendications 1 à 7 ou un navire ou support flottant selon l'une des revendications 8 à 10, recevant un liquide sur le dit plateau collecteur supérieur **caractérisé en ce qu'**on réalise les étapes dans lesquelles :
e.1) on remplit le premier conduit longitudinal (5) de liquide, et
e.2) lorsque le niveau de liquide dans le premier conduit atteint une valeur seuil maximale, on ouvre la dite vanne (12) et on met en communication les deux conduits longitudinaux (5, 6) et on remplit ainsi le deuxième conduit à un méme niveau de liquide que le premier conduit, et
e.3) on referme la dite vanne si le dit niveau de liquide identique des dits premier et deuxième conduits diminue dessous une valeur seuil minimale.

9. Procédé selon la revendication 8, **caractérisé en ce qu'**on réalise le déclenchement automatique de l'ouverture ou de la fermeture de la vanne (12) en fonction de la mesure du niveau de liquide dans les dits premier et deuxième conduits de sorte que :
a) à l'étape e.2), la dite vanne s'ouvre automatiquement, lorsque, à débit croissant dans le seul dit premier conduit (5), le niveau de
liquide dans le premier conduit atteint une valeur seuil maximale Hmax, et
b) à l'étape e.3), la vanne se referme automatiquement lorsque, à débit décroissant dans les deux dits premier et deuxième conduits (5, 6), le niveau de liquide identique dans les deux premier et deuxième conduits en communication de par la vanne ouverte descend jusqu'à une
valeur seuil minimale supérieure ou égale à Hmin, Hmin étant la hauteur commune minimale requise de liquide dans les dits premier et deuxième conduits en communication au niveau de la dite vanne pour obtenir une distribution homogène de liquide entre les différents orifices des dites première et deuxième séries de rampes.

10. Procédé selon la revendication 9, **caractérisé en ce que**, à l'étape e.2), on ouvre la dite vanne (12) et met en communication les deux conduits longitudinaux (5, 6) de sorte que le niveau du liquide (H1) dans le premier conduit qui était de valeur maximale Hmax redescende jusqu'à un niveau de liquide dans le deuxième conduit Ho identique à celui du premier conduit, Ho étant supérieure ou égale à Hmin et correspondant à un débit du deuxième distributeur supérieur ou égal à Q₂min; les premier et deuxième distributeurs étant configurés de telle sorte que : a) Q₂min soit inférieur ou égal à Q₁max-Q₁min,
- les premier et deuxième distributeurs étant définis comme consistant dans : le premier conduit (5) et les orifices (8c) de la première série de rampes, pour le premier distributeur, et
- le deuxième conduit (6) et les orifices (8c) de la deuxième série de rampes, pour le deuxième distributeur; et
- Q₁min et Q₂min étant définis comme les débits cumulés minimaux des orifices (8c) de la première série de rampes, et respectivement de la deuxième série de rampes, permettant une distribution homogène de liquide par les dites première et deuxième séries de rampes, et
- Q₁max étant défini comme le débit maximal du premier distributeur lorsque la hauteur de liquide dans le premier conduit est de valeur maximale Hmax, et
b) lorsqu'on ouvre la dite vanne (12) et met en communication les deux conduits longitudinaux (5, 6), le niveau du liquide dans le premier conduit qui est de valeur maximale Hmax redescende jusqu'à un niveau de liquide dans le deuxième conduit Ho identique à celui du premier conduit, HO étant supérieure ou égal à Hmin.

11. Procédé selon la revendication 10, **caractérisé en ce que**, à l'étape e.2), on ouvre la dite vanne (12) et met en communication les deux conduits longitudinaux (5, 6) de sorte que le niveau du liquide (H1) dans le premier conduit qui était de valeur maximale Hmax redescende jusqu'à un niveau de liquide dans le deuxième conduit Ho identique à celui du premier conduit, HO étant supérieure à Hmin et correspondant à un
débit du deuxième distributeur supérieur à Q₂min; Q₂min soit inférieur à Q₁max-Q₁min, les premier et deuxième distributeurs étant configurés de telle sorte que :
a) Q₂min soit inférieur à Q₁max-Q₁min, et
b) lorsqu'on ouvre la dite vanne (12) et met en communication les deux conduits longitudinaux (5, 6), le niveau du liquide dans le premier conduit qui est de valeur maximale Hᵢmax redescende jusqu'à un niveau de liquide dans le deuxième conduit Ho identique à celui du premier conduit, Ho étant supérieure à Hmin.

12. Procédé selon l'une des revendications 8 à 11, **caractérisé**
**en ce que** le débit correspondant au seuil de déclenchement (Hmax) d'ouverture de la dite vanne en débit croissant pour passer du mode de fonctionnement avec le seul premier distributeur en action au mode de fonctionnement en double distribution avec les deux premier et deuxième distributeurs en action, est supérieur au débit correspondant au seuil de déclenchement (Hmin) de la fermeture de la vanne en débit décroissant pour passer du mode de fonctionnement en double distribution avec les deux premier et deuxième distributeurs en action au mode de fonctionnement avec le seul premier distributeur en action.

13. Procédé selon l'une des revendications 11 et 12, **caractérisé**
**en ce que** qu'il comprend les étapes suivantes dans lesquelles :
1) le niveau de liquide croit dans le seul premier conduit, et
2) on ouvre la dite vanne (12) lorsque le niveau de liquide atteint le seuil de hauteur maximale Hmax dans le premier conduit correspondant à un débit homogène maximal du premier distributeur Q₁max et on met en communication les deux conduits longitudinaux (5, 6) de sorte que le niveau du liquide dans le premier conduit qui était de valeur maximale Hmax redescende jusqu'à un niveau de liquide dans le deuxième conduit Ho identique à celui du premier conduit, Ho étant supérieur à la dite valeur Hmin, et
3) le niveau de liquide croit à partir de Ho,dans les deux premier et deuxième conduits le dispositif étant désormais en mode de fonctionnement de distribution double avec les deux premier et deuxième distributeurs en action, le débit cumulé des deux distributeurs augmente de Q₁max à Q₁max+ Q₂max, Q₂max étant défini comme le débit maximal du deuxième distributeur lorsque la hauteur de liquide identique dans les premier et deuxième conduit est maximale Hmax; et
4) lorsque le dispositif est en mode de fonctionnement de distribution double avec les deux premier et deuxième distributeurs en action, le débit étant entre Q₁max et Q₁max+ Q₂max, si le débit décroit on ne ferme la dite vanne (12) que lorsque le débit atteint une valeur seuil minimale Q₀ entre Q₁min et Q₁max avec un niveau du liquide Hmin dans les deux conduits (5, 6), Q₀ étant supérieur ou égal à Q₁min+Q₂min de préférence égal à Q₁min+Q₂min, et
5) après fermeture de la dite vanne (12), le niveau de liquide dans le premier conduit remonte à une valeur H₁ supérieure à Hmin mais
inférieure à Hmax avec un débit entre Q₁min et Q₁max, le dispositif reste en mode de fonctionnement de distribution simple avec le seul premier distributeur en action tant que le niveau de liquide ne dépasse pas Hmax dans le premier conduit.

## Patentansprüche

1. Vorrichtung zur doppelten Verteilung einer Flüssigkeit (1), einsetzbar in jeder Art von vertikalem Apparat, in dem eine flüssige Phase auf Basis von Schwerkraft fließt, die gleichmäßig in mindestens einem Bereich (9) verteilt werden muss, der unterhalb der genannten Vorrichtung zur doppelten Verteilung einer Flüssigkeit angeordnet ist und sich über mindestens einen Querschnitt senkrecht zur vertikalen Achse des genannten Schwerkraftabscheiders erstreckt, wobei der Flüssigkeitsverteiler (1) eine obere Auffangwanne (2) umfasst, die über mindestens zwei längsverlaufende Flüssigkeitsablaufleitungen (5, 6) mit einem Rampenträger (7) verbunden ist, wobei der genannte Rampenträger (7) mindestens zwei Reihen von quer verlaufenden Rohrrampen (8, 8a-8b) trägt und die Flüssigkeitszufuhr zur ersten Reihe von Rampen (8a) über eine erste Längsleitung (5) bzw. zur zweiten Reihe von Rampen (8b) über eine zweite Längsleitung (6) ermöglicht, wobei jede Rampe (8, 8a-8b) an ihrer Unterseite Verteilungsöffnungen (8c) aufweist, die dazu geeignet sind, die Flüssigkeit auf den Bereich unterhalb der Rampen der Vorrichtung zur doppelten Verteilung einer Flüssigkeit (1) zu verteilen, wobei die Form der Auffangwanne (2) so ausgelegt ist, dass sie eine Flüssigkeit auf der Auffangwanne zu einer oberen Öffnung (5a) der ersten Längsleitung (5) leitet, und wobei die obere Öffnung (6a) der zweiten Leitung auf einer Höhe mündet, die über die genannte Auffangwanne hinausragt, **dadurch gekennzeichnet, dass** die beiden Längskanäle (5, 6) für den Flüssigkeitsabfluss im unteren Bereich (5b, 6b) durch eine Verbindungsvorrichtung (11) verbunden sind, die mit einem gesteuerten Ventil (12) ausgestattet ist, das den kontrollierten Transfer der Flüssigkeit zwischen den beiden Längskanälen ermöglicht, wobei das genannte Ventil eine Auslösung seines Öffnens oder Schließens aufweist, die ausschließlich auf der Messung des Flüssigkeitsstands in dem ersten und zweiten Kanal basiert.

2. Vorrichtung zur doppelten Verteilung einer Flüssigkeit gemäß Anspruch 1, **dadurch gekennzeichnet, dass** die Verbindungsvorrichtung (11) in den unteren Teil (5b, 6b) sowohl der ersten als auch der zweiten Leitung (5, 6) auf Höhe ihrer unteren Enden mündet.

3. Vorrichtung zur doppelten Verteilung einer Flüssigkeit nach Anspruch 1 oder 2, **dadurch gekennzeichnet, dass** die Auslösung des Öffnens oder Schließens des Ventils (12) ausschließlich auf der Messung des Flüssigkeitsstands in der ersten und der zweiten Leitung beruht, sodass:
a) sich das Ventil automatisch öffnet, wenn bei steigendem Durchfluss in der ersten Leitung (5) der Flüssigkeitsstand in der ersten Leitung einen maximalen Schwellenwert Hmax erreicht, und
b) das Ventil sich automatisch wieder schließt, wenn bei abnehmendem Durchfluss in der ersten und der zweiten Leitung (5, 6) der identische Flüssigkeitsstand in der ersten und der zweiten Leitung, die durch das geöffnete Ventil miteinander in Kommunikation stehen, auf einen minimalen Schwellenwert von mindestens Hmin absinkt, wobei Hmin die erforderliche Mindestflüssigkeitshöhe in der ersten und zweiten Leitung ist, die an dem Ventil (12) miteinander in Kommunikation stehen, um eine gleichmäßige Flüssigkeitsverteilung zwischen den verschiedenen Öffnungen der ersten und zweiten Reihe von Rampen zu erreichen.

4. Vorrichtung zur doppelten Verteilung einer Flüssigkeit nach einem der Ansprüche 1 bis 3 **dadurch gekennzeichnet, dass** sich die quer verlaufenden Rohrrampen (8, 8a-8b) zueinander parallel in einer zu einer axialen Längsrichtung ZZ' der Doppelverteilungsvorrichtung (1) senkrechten Querrichtung verlaufen, und die beiden Reihen von Rampen (8a, 8b) in der Längsrichtung (ZZ') der Doppelverteilungsvorrichtung (1) auf gleicher Höhe angeordnet sind, wobei die Rampen der ersten Reihe (8a) parallel zwischen den Rampen der zweiten Reihe (8b) angeordnet sind.

5. Schiff oder schwimmende Plattform mit einem vertikalen Apparat (10), in dem eine flüssige Phase auf Basis von Schwerkraft fließt, mit mindestens einer Vorrichtung zur doppelten Verteilung einer Flüssigkeit gemäß einem der Ansprüche 1 bis 4,
der in einer zylindrischen Wand (10a) des genannten Schwerkraftabscheiders (10) sowie koaxial und oberhalb eines genannten Bereichs (9) angeordnet ist, der gleichmäßig mit der Flüssigkeit besprüht werden muss, wobei sich der genannte Bereich über den Querschnitt der genannten Schwerkraftabscheider senkrecht zur axialen Längsrichtung (ZZ') der genannten zylindrischen Wand erstreckt, wobei die genannte Auffangplatte quer und koaxial zur genannten zylindrischen Wand sowie angrenzend an die genannte zylindrische Wand angeordnet ist.

6. Schiff oder schwimmende Plattform nach Anspruch 5, **dadurch gekennzeichnet, dass** der genannte Schwerkraftabscheider eine Vielzahl von Bereichen (9) umfasst, die sich über den Querschnitt der genannten Kolonne erstrecken und in axialer Längsrichtung (ZZ') der genannten Kolonne voneinander beabstandet sind, wobei eine Vielzahl der genannten Vorrichtung zur doppelten Verteilung einer Flüssigkeit jeweils zwischen zwei Füllkörperbetten angeordnet ist.

7. Schiff oder schwimmende Plattform nach Anspruch 5 oder 6, **dadurch gekennzeichnet, dass** der Schwerkraftabscheider eine Fraktionierungs- oder Waschkolonne (10) ist, die mindestens ein Füllkörperbett (9) umfasst, das sich in einem genannten Bereich über den Querschnitt der genannten Kolonne senkrecht zur axialen Längsrichtung ZZ' der genannten Kolonne erstreckt.

8. Verfahren zur Flüssigkeitsverteilung unter Verwendung einer Vorrichtung zur doppelten Verteilung einer Flüssigkeit gemäß einem der Ansprüche 1 bis 4 oder eines Schiffes oder einer schwimmenden Plattform gemäß einem der Ansprüche 5 bis 7,
wobei eine Flüssigkeit auf der genannten oberen Auffangplatte aufgenommen wird, **dadurch gekennzeichnet, dass** die folgenden Schritte durchgeführt werden:
e.1) die erste Längsleitung (5) mit Flüssigkeit befüllt wird, und
e.2) wenn der Flüssigkeitsstand in der ersten Leitung einen maximalen Schwellenwert erreicht, das genannte Ventil (12) geöffnet wird und die beiden Längsleitungen (5, 6) miteinander in Kommunikation gebracht werden, wodurch die zweite Leitung bis auf denselben Flüssigkeitsstand wie die erste Leitung befüllt wird, und
e.3) das genannte Ventil wieder geschlossen wird, wenn der genannte identische Flüssigkeitsstand in der ersten und zweiten Leitung unter einen minimalen Schwellenwert absinkt.

9. Verfahren nach Anspruch 8, **dadurch gekennzeichnet, dass** die automatische Auslösung des Öffnens oder Schließens des Ventils (12) in Abhängigkeit von der Messung des Flüssigkeitsstands in der ersten und der zweiten Leitung so erfolgt, dass:
a) in Schritt e.2) das Ventil automatisch öffnet, wenn bei steigendem Durchfluss in der alleinigen ersten Leitung (5) der Flüssigkeitsstand in der ersten Leitung einen maximalen Schwellenwert Hmax erreicht, und
b) in Schritt e.3) das Ventil automatisch schließt, wenn bei abnehmendem Durchfluss in der ersten und der zweiten Leitung (5, 6) der identische Flüssigkeitsstand in der ersten und der zweiten Leitung, die durch das geöffnete Ventil miteinander in Kommunikation stehen, auf einen minimalen Schwellenwert größer oder gleich Hmin absinkt, wobei Hmin die erforderliche gemeinsame Mindestflüssigkeitshöhe in der ersten und zweiten Leitung ist, die an dem Ventil miteinander in Kommunikation stehen, um eine gleichmäßige Flüssigkeitsverteilung zwischen den verschiedenen Öffnungen der ersten und zweiten Reihe von Rampen zu erreichen.

10. Verfahren nach Anspruch 9, **dadurch gekennzeichnet, dass** in Schritt e.2) das genannte Ventil (12) geöffnet und die beiden Längsleitungen (5, 6) miteinander in Kommunikation gebracht werden, so dass der Flüssigkeitsstand (H1) in der ersten Leitung, der den Maximalwert Hmax hatte, auf einen Flüssigkeitsstand Ho in der zweiten Leitung absinkt, der mit dem der ersten Leitung identisch ist, wobei Ho größer oder gleich Hmin ist und einem Durchfluss des zweiten Verteilers entspricht, der größer oder gleich Q₂min ist; wobei der erste und der zweite Verteiler so ausgelegt sind, dass:
a) Q₂min kleiner oder gleich Q₁max-Q₁min ist,
- wobei der erste und der zweite Verteiler definiert sind als bestehend aus: der ersten Leitung (5) und den Öffnungen (8c) der ersten Reihe von Rampen, für den ersten Verteiler, und
- der zweiten Leitung (6) und den Öffnungen (8c) der zweiten Reihe von Rampen, für den zweiten Verteiler; und
- wobei Q₁min und Q₂min als die minimalen kumulierten Durchflussmengen der Öffnungen (8c) der ersten Reihe von Rampen bzw. der zweiten Reihe von Rampen definiert sind, die eine homogene Flüssigkeitsverteilung durch die genannten ersten und zweiten Reihen von Rampen ermöglichen, und
- Q₁max als die maximale Durchflussmenge des ersten Verteilers definiert ist, wenn die Flüssigkeitshöhe in der ersten Leitung den Maximalwert Hmax erreicht, und
b) wenn das genannte Ventil (12) geöffnet wird und die beiden Längsleitungen (5, 6) miteinander in Kommunikation gebracht werden, der Flüssigkeitsstand in der ersten Leitung, der den Maximalwert Hmax aufweist, auf einen Flüssigkeitsstand in der zweiten Leitung Ho absinkt, der mit dem der ersten Leitung identisch ist, wobei Ho größer oder gleich Hmin ist.

11. Verfahren nach Anspruch 10, **dadurch gekennzeichnet, dass** in Schritt e.2) das genannte Ventil (12) geöffnet und die beiden Längsleitungen (5, 6) miteinander in Kommunikation gebracht werden, so dass der Flüssigkeitsstand (H1) in der ersten Leitung, der den Maximalwert Hmax hatte, auf einen Flüssigkeitsstand in der zweiten Leitung Ho absinkt, der mit dem der ersten Leitung identisch ist, wobei Ho größer als Hmin ist und einem Durchfluss des zweiten Verteilers entspricht, der größer als Q₂min ist; Q₂min kleiner ist als Q₁max-Q₁min, wobei der erste und der zweite Verteiler so konfiguriert sind, dass:
a) Q₂min kleiner ist als Q₁max-Q₁min, und
b) wenn das genannte Ventil (12) geöffnet und die beiden Längsleitungen (5, 6) miteinander in Kommunikation gebracht werden, der Flüssigkeitsstand in der ersten Leitung, der den Maximalwert Hᵢmax aufweist, auf einen Flüssigkeitsstand in der zweiten Leitung Ho absinkt, der mit dem der ersten Leitung identisch ist, wobei Ho größer als Hmin ist.

12. Verfahren nach einem der Ansprüche 8 bis 11, **dadurch gekennzeichnet dass** der Durchfluss, der dem Auslöseschwellenwert (Hmax) für das Öffnen des Ventils bei steigendem Durchfluss entspricht, um vom Betriebsmodus mit nur dem ersten Verteiler in Betrieb in den Betriebsmodus mit doppelter Verteilung mit dem ersten und dem zweiten Verteiler in Betrieb zu wechseln, größer ist als der Durchfluss, der dem Auslöseschwellenwert (Hmin) für das Schließen des Ventils bei abnehmendem Durchfluss, um vom Betriebsmodus mit doppelter Verteilung, bei dem sowohl der erste als auch der zweite Verteiler in Betrieb sind, in den Betriebsmodus mit nur dem ersten Verteiler in Betrieb zu wechseln, größer ist.

13. Verfahren nach einem der Ansprüche 11 und 12, **dadurch gekennzeichnet, dass** es die folgenden Schritte umfasst, bei denen:
1) der Flüssigkeitsstand nur in der ersten Leitung ansteigt, und
2) das genannte Ventil (12) geöffnet wird, wenn der Flüssigkeitsstand in der ersten Leitung den Schwellenwert der maximalen Höhe Hmax erreicht, der einem maximalen gleichmäßigen Durchfluss des ersten Verteilers Q₁max entspricht, und die beiden Längsleitungen (5, 6) miteinander in Kommunikation gebracht werden, so dass der Flüssigkeitsstand in der ersten Leitung, der den Maximalwert Hmax hatte, auf einen Flüssigkeitsstand in der zweiten Leitung Ho absinkt, der mit dem der ersten Leitung identisch ist, wobei Ho größer als der genannte Wert Hmin ist, und
3) der Flüssigkeitsstand steigt von Ho aus in der ersten und der zweiten Leitung an, wobei sich die Vorrichtung nun im Doppelverteilungsmodus befindet und sowohl der erste als auch der zweite Verteiler in Betrieb sind, wobei der kumulierte Durchfluss beider Verteiler von Q₁max auf Q₁max + Q₂max ansteigt, wobei Q₂max als der maximale Durchfluss des zweiten Verteilers definiert ist, wenn der identische Flüssigkeitsstand in der ersten und der zweiten Leitung maximal Hmax beträgt; und
4) wenn sich die Vorrichtung im Doppelverteilungsbetriebsmodus befindet, wobei sowohl der erste als auch der zweite Verteiler in Betrieb sind und der Durchfluss zwischen Q₁max und Q₁max + Q₂max liegt, wird das genannte Ventil (12) bei abnehmendem Durchfluss erst dann geschlossen, wenn der Durchfluss einen minimalen Schwellenwert Q₀ zwischen Q₁min und Q₁max bei einem Flüssigkeitsstand Hmin in beiden Leitungen (5, 6) erreicht, wobei Q₀ größer oder gleich Q₁min + Q₂min ist, vorzugsweise gleich Q₁min + Q₂min, und
5) nach dem Schließen des Ventils (12) steigt der Flüssigkeitsstand in der ersten Leitung auf einen Wert H₁ an, der größer als Hmin, aber kleiner als Hmax ist, bei einem Durchfluss zwischen Q₁min und Q₁max, wobei die Vorrichtung im einfachen Verteilungsbetriebsmodus verbleibt, wobei nur der erste Verteiler in Betrieb ist, solange der Flüssigkeitsstand in der ersten Leitung Hmax nicht überschreitet.

## Claims

1. A double liquid distribution device (1), useful in any type of vertical apparatus for gravity flow of a liquid phase requiring to be evenly distributed in at least one zone (9) arranged below said double liquid distribution device and extending over at least one section orthogonal to the vertical axis of said gravity flow apparatus, the liquid distribution device (1) comprising an upper collecting plate (2) connected to a manifold support (7) by at least two longitudinal liquid downpipes (5, 6), said manifold support (7) supporting at least two arrays of transverse tubular manifolds (8, 8a-8b) and allowing the supply of liquid to the first arrays of manifolds (8a) through a first longitudinal pipe (5) and to the second array of manifolds (8b) through a second longitudinal pipe (6), respectively, each manifold (8, 8a-8b) comprising distribution orifices (8c) underneath, adapted to distribute the liquid onto said zone located below said manifolds of the double liquid distribution device (1), the shape of the collecting plate (2) being adapted to channel a liquid on the collecting plate towards an upper opening (5a) of the first longitudinal pipe (5), and the upper opening (6a) of the second pipe reaching a level above said collecting plate,
**characterized in that** the two longitudinal liquid downpipes (5, 6) are connected to each other at a bottom part (5b, 6b) by means of a communication device (11) provided with a controlled-opening valve (12) adapted to allow transferring the liquid between the two longitudinal pipes in a controlled manner, said valve being triggered to open or close only as a function of the measurement of the liquid level in said first and second pipes.

2. The double liquid distribution device according to claim 1, **characterized in that** the communication device (11) opens into the bottom part (5b, 6b) of each of the first and second pipes (5, 6) at the lower ends thereof, respectively.

3. The double liquid distribution device according to claim 1 or 2, **characterized in that** the valve (12) is triggered to open or close only as a function of the measurement of the liquid level in said first and second pipes so that:
a) said valve automatically opens when, as the flow rate only in said first pipe (5) increases, the liquid level in the first pipe reaches a maximum threshold value Hmax, and
b) the valve automatically closes when, as the flow rate in both said first and second pipes (5, 6) decreases, the liquid level - which is the same in both the first and second pipes in communication through the open valve - drops to a minimum threshold value greater than or equal to Hmin, Hmin being the minimum required liquid level in said first and second pipes in communication at said valve (12) to achieve an even distribution of liquid between the various orifices of said first and second arrays of manifolds.

4. The double liquid distribution device according to one of claims 1 to 3, **characterized in that** the transverse tubular manifolds (8, 8a-8b) extend parallel to one another in a transverse direction perpendicular to an axial longitudinal direction (ZZ') of the double distribution device (1), and the two arrays of manifolds (8a, 8b) are arranged at the same level in the longitudinal direction (ZZ') of the double distribution device (1), the manifolds (8a) of the first array being interposed in parallel between the manifolds (8b) of the second array.

5. A vessel or floating support comprising a vertical apparatus (10) for gravity flow of a liquid phase, comprising at least one double liquid distribution device according to one of claims 1 to 4 arranged within a cylindrical wall (10a) of said gravity flow apparatus (10) and coaxially above said zone (9) that needs to be wetted evenly by the liquid, said zone extending over the cross-section of said gravity flow apparatus perpendicularly to the axial longitudinal direction (ZZ') of said cylindrical wall, said collecting plate being arranged transversely and coaxially to said cylindrical wall and adjacent to said cylindrical wall.

6. The vessel or floating support according to claim 5, **characterized in that** said gravity flow apparatus comprises a plurality of zones (9) extending over the cross-section of said column and spaced apart from one another in the axial longitudinal direction (ZZ') of said column, with a plurality of said double liquid distribution devices each interposed between two packed beds.

7. The vessel or floating support according to claim 5 or 6, **characterized in that** said gravity flow apparatus is a fractionating or washing column (10) comprising at least one packed bed (9) extending into said zone over the cross-section of said column perpendicularly to the axial longitudinal direction (ZZ') of said column.

8. A process of distributing liquid by means of a double liquid distribution device according to one of claims 1 to 4, or a vessel or floating support according to one of claims 5 to 7, receiving a liquid on said upper collecting plate **characterized in that** the following steps are carried out:
e.1) filling the first longitudinal pipe (5) with liquid, and
e.2) when the liquid level in the first pipe reaches a maximum threshold value, opening said valve (12) and putting the two longitudinal pipes (5, 6) in mutual communication, and thus filling the second pipe to the same liquid level as the first pipe, and
e.3) closing said valve if said identical liquid level of said first and second pipes decreases below a minimum threshold value.

9. The process according to claim 8, **characterized in that** the valve (12) is automatically triggered to open or close as a function of the measurement of the liquid level in said first and second pipes, so that:
a) in step e.2), said valve automatically opens when, as the flow rate only in the first pipe (5) increases, the liquid level in the first pipe reaches a maximum threshold value Hmax, and
b) in step e.3), the valve automatically closes when, as the flow rate in both said first and second pipes (5, 6) decreases, the liquid level - which is the same in both the first and second pipes in communication through the open valve - drops to a minimum threshold value greater than or equal to Hmin, Hmin being the minimum required common liquid level in said first and second pipes in communication at said valve to achieve an even distribution of liquid between the various orifices of said first and second arrays of manifolds.

10. The process according to claim 9, **characterized in that**, in step e.2), said valve (12) is opened and the two longitudinal pipes (5, 6) are put in mutual communication so that the liquid level (H1) in the first pipe, which was at the maximum value Hmax, drops again to a liquid level Ho in the second pipe that is the same as that in the first pipe, Ho being greater than or equal to Hmin and corresponding to a flow rate of the second distributor exceeding or equal to Q₂min; the first and second distributors being configured so that:
a) Q₂min is lower than or equal to Q₁max-Q₁min,
- the first and second distributors being defined as consisting of: the first pipe (5) and the orifices (8c) of the first array of manifolds, for the first distributor, and
- the second pipe (6) and the orifices (8c) of the second array of manifolds, for the second distributor; and
- Q₁min and Q₂min being defined as the minimum cumulative flow rates of the orifices (8c) of the first array of manifolds and the second array of manifolds, respectively, allowing an even distribution of liquid through said first and second arrays of manifolds, and
- Q₁max being defined as the maximum flow rate of the first distributor when the liquid level in the first pipe is at the maximum value Hmax, and
b) when said valve (12) is opened and the two longitudinal pipes (5, 6) are put in mutual communication, the liquid level in the first pipe, which is at the maximum value Hmax, drops again to a liquid level Ho in the second pipe that is the same as that in the first pipe, Ho being greater than or equal to Hmin.

11. The process according to claim 10, **characterized in that**, in step e.2), said valve (12) is opened and the two longitudinal pipes (5, 6) are put in mutual communication so that the liquid level (H1) in the first pipe, which was at the maximum value Hmax, drops again to a liquid level Ho in the second pipe that is the same as that in the first pipe, Ho being greater than Hmin and corresponding to a flow rate of the second distributor exceeding Q₂min; with Q₂min being lower than Q₁max-Q₁min, the first and second distributors being configured so that:
a) Q₂min is lower than Q₁max-Q₁min, and
b) when said valve (12) is opened and the two longitudinal pipes (5, 6) are put in mutual communication, the liquid level in the first pipe, which is at the maximum value Hᵢmax, drops again to a liquid level Ho in the second pipe that is the same as that in the first pipe, Ho being greater than Hmin.

12. The process according to one of claims 8 to 11, **characterized in that** the flow rate corresponding to the trigger threshold (Hmax) for said valve to open at an increasing flow rate to switch from the operation mode with only the first distributor in operation to the double-distribution operation mode with both the first and second distributors in operation is greater than the flow rate corresponding to the trigger threshold (Hmin) for the valve to close at a decreasing flow rate to switch from the double-distribution operation mode with both the first and second distributors in operation to the operation mode with only the first distributor in operation.

13. The process according to one of claims 11 and 12, **characterized in that** it includes the following steps in which:
1) the liquid level increases in the first pipe only, and
2) said valve (12) is opened when the liquid level reaches the maximum level threshold Hmax in the first pipe, corresponding to a maximum even flow rate Q₁max in the first distributor, and the two longitudinal pipes (5, 6) are put in mutual communication so that the liquid level in the first pipe, which was at the maximum value Hmax, drops again to a liquid level Ho in the second pipe that is the same as that in the first pipe, Ho being greater than said value Hmin, and
3) the liquid level increases from Ho in both the first and second pipes, the device being now in the double-distribution operation mode with both the first and second distributors in operation, the combined flow rate of the two distributors increases from Q₁max to Q₁max+Q₂max, Q₂max being defined as the maximum flow rate of the second distributor when the same liquid level in both the first and second pipes is maximum, Hmax; and
4) when the device is in the double-distribution operation mode with both the first and second distributors in operation, with the flow rate being between Q₁max and Q₁max+Q₂max, if the flow rate decreases, said valve (12) is closed only when the flow rate reaches a minimum threshold value Q₀ between Q₁min and Q₁max with a liquid level Hmin in both pipes (5, 6), Q₀ being greater than or equal to Q₁min+Q₂min, preferably equal to Q₁min+Q₂min, and
5) once said valve (12) is closed, the liquid level in the first pipe increases again to a value H₁ which is higher than Hmin but lower than Hmax with a flow rate between Q₁min and Q₁max, the device remains in the simple distribution operation mode with only the first distributor in operation as long as the liquid level does not exceed Hmax in the first pipe.
